# EUROPÄISCHE PATENTSCHRIFT

(11) **EP 3 463 742 B1**
(45) Veröffentlichungstag und Bekanntmachung des Hinweises auf die Patenterteilung: **09.12.2020**
(21) Anmeldenummer: 17731086.9
(22) Anmeldetag: 07.06.2017
(51) Int. Cl.: B23K 26/12, B23K 26/08, B23K 26/342

(54) **WERKZEUGMASCHINE ZUM AUFTRAGSSCHWEISSEN**
MACHINE TOOL FOR BUILD-UP WELDING
MACHINE-OUTIL POUR SOUDAGE PAR APPORT DE MATIÈRE

(30) Priorität: 07.06.2016 DE 102016210042
(43) Veröffentlichungstag der Anmeldung: 10.04.2019
(73) Patentinhaber: Sauer GmbH, 55758 Stipshausen (DE)
(72) Erfinder: REISACHER, Martin, 87435 Kempten (DE)
(74) Vertreter: MERH-IP Matias Erny Reichl Hoffmann Patentanwälte PartG mbB
(86) Internationale Anmeldenummer: PCT/EP2017/063817
(87) Internationale Veröffentlichungsnummer: WO 2017/211882

(56) Entgegenhaltungen:
- WO-A2-01/87528
- US-A1- 2015 114 938
- US-B1- 7 020 539

## Beschreibung

Die vorliegende Erfindung betrifft eine Werkzeugmaschine, die zur Bearbeitung eines Werkstücks mit einem Laserkopf zum Auftragsschweißen eingerichtet ist.

### Hintergrund der Erfindung

Beim sogenannten Laserauftragsschweißen handelt es sich um eine besonderen Ausprägung des "additive manufacturing", bei dem die Formgebung durch Hinzufügen eines Werkstoffes erfolgt, in dem an einem Werkstück eine Oberflächenbearbeitung mittels Aufbringen und Verschmelzen eines Sekundärmaterials (z.B. Metallpulver, Draht) durch einen Laserstrahl durchgeführt wird. Dies steht im Gegensatz zu der sonst an Werkzeugmaschinen üblichen subtraktiven Bearbeitung, bei der die Formgebung zumeist durch spanabhebende Bearbeitung oder dergleichen erfolgt.

Das Sekundärmaterial wird dabei schichtweise oder punktuell auf das Basismaterial aufgetragen und mit diesem verschmolzen. Ein besonderer Vorzug dieses Bearbeitungsverfahrens ist, dass die Verbindung zwischen Basismaterial und Sekundärmaterial ohne das Generieren von Poren oder Rissen durchgeführt werden kann, da sowohl Basismaterial als auch Sekundärmaterial aufgeschmolzen werden und die Schmelzen sich miteinander verbinden. Das Sekundärmaterial geht auf diese Weise beim Laserauftragsschweißen eine hochfeste Schweißverbindung mit der Oberfläche des Werkstücks ein.

Durch eine Werkstückbearbeitung mittels Laserauftragsschweißen ist es somit möglich, dreidimensionale Strukturen mit variabler Wandstärke ohne Stützgeometrie an dem Werkstück und in hoher Qualität durch ein Wiederholen einer schichtweisen oder punktuellen Aufbringung des Sekundärmaterials auf dem Werkstück auszubilden. Nach dem Verfahrensschritt des Laserauftragsschweißens wird das Werkstück üblicherweise in einem separaten Arbeitsprozess abgekühlt und einer spanenden Metallbearbeitung zugeführt.

Eine grundlegende Patentanmeldung zum Thema "additive manufacturing" ist die DE 102013224649A1 des Anmelders. Darin wird das Konzept einer Werkzeugmaschine offenbart, die eine präzise Fertigung von Werkstücken mittels Laserauftragsschweißens erlaubt. Insbesondere wird dabei die Problematik von Toleranzen der Maßgenauigkeiten aufgrund von Ungenauigkeiten während des Auftragsschweißvorgangs, sowie das Problem von Größenveränderungen aufgrund von Temperaturuntervarianzen behandelt.

Weiterhin werden die Bearbeitungsschritte der subtraktiven Werkstückbearbeitung (z.B. Materialabtragung durch Spanvorgänge) unter Durchführung von IOC-gesteuerten (Intelligent Orientation Control) Abläufen dargestellt. Kennzeichnend für solche IOC-gesteuerten Abläufe ist eine Erhöhung der Komplexität der Maschinenkinematik bei Werkzeugmaschinen, die sowohl für ein additives als auch ein subtraktives Bearbeiten eingerichtet sind.

Insbesondere bei Werkzeugmaschinen mit gleichzeitiger Span- und Laserbearbeitung bestehen Herausforderungen hinsichtlich des Werkzeugwechsels zwischen Span- und Laserbearbeitungswerkzeug. In diesem Zusammenhang spielt es insbesondere eine Rolle, dass während des Auftragsschweißens mittels Zuführens eines Schutzgasstroms auf die Schweißposition eine Oxidation während des Schichtaufbauprozesses unterdrückt werden muss.

Entsprechend sind aus dem Stand der Technik Systeme zum Laserschweißen oder Lasersintern bekannt, bei denen eine kontrollierbare Arbeitsatmosphäre in einem Bearbeitungsabschnitt erzeugt werden kann. Beispielsweise beschreibt die Patentschrift WO 2010/026397 A1 eine Vorrichtung zur additiven Fertigung (Lasersintern, Laserschweißen) mit einer Bearbeitungskammer und einem austauschbaren optischen Modul mit einem hermetisch versiegelbaren Gehäuse, um einen Laserstrahl durch ein Fenster der Prozesskammer zu leiten. Zusätzlich kann das Modul dazu eingerichtet sein, eine Inertgasatmosphäre zu erzeugen, um die Komponenten innerhalb des optischen Moduls bei einer konstanten Temperatur zu halten.

Die Patentschrift US 7020539 B1 beschreibt ein thermisches Beschichtungssystem (z.B. schweißbasiertes Beschichtungssystem, laserbasiertes Beschichtungssystem) zum Aufbringen von Materialschichten mittels zu verschweißenden Metallpulvers, um dreidimensionale Bauelemente zu erzeugen. Das thermische Beschichtungssystem kann eine Kammer eines Pulverzuführsystems umfassen, die eingerichtet ist, um mittels eines inerten Trägergastroms durch eine Einlass und Auslassöffnung ein Vakuum in der Kammer zu erzeugen, um Verunreinigungen von einer Fläche einer Pulververteilervorrichtung in der Kammer zu beseitigen.

Eine Aufgabe der vorliegenden Erfindung ist es im Hinblick auf den Stand der Technik eine Werkzeugmaschine und ein Verfahren bereitzustellen, die eine Optimierung der Prozessabläufe bei der additiven Werkstückbearbeitung ermöglichen, um insbesondere die Effizienz bei der Werkstückbearbeitung und die Qualität der bearbeiteten Werkstücke zu erhöhen.

Die Erfindung schlägt hierzu eine Werkzeugmaschine gemäß Patentanspruch 1 und eine Verfahren nach Anspruch 13 vor. Abhängige Ansprüche betreffen bevorzugte Ausführungsbeispiele der Erfindung.

Erfindungsgemäß wird eine Werkzeugmaschine vorgeschlagen mit einem Arbeitstisch zum Aufspannen von mindestens einem Werkstück, einem Laserkopf mit einer Pulverdüse zum Auftragen eines Materials auf das Werkstück und Verschweißen des Materials mit dem Werkstück, einer Laserkopfpositioniervorrichtung zum Positionieren des Laserkopfs im Verhältnis zu dem Werkstück zur Bearbeitung des Werkstücks durch Auftragen und Verschweißen des aufgebrachten Materials, einer mit einem Schutzgas befüllbaren Schutzgasvorrichtung zur Bearbeitung des Werkstücks durch den Laserkopf unter Schutzgasatmosphäre und einer Positioniervorrichtung zum Verfahren und Positionieren der Schutzgasvorrichtung auf dem Arbeitstisch.

Durch die erfindungsgemäße Ausgestaltung der Werkzeugmaschine mit einer Schutzgasvorrichtung, die mittels der Positioniervorrichtung verfahren und positioniert werden kann, ergeben sich eine Reihe wesentlicher Vorteile im Hinblick auf die Verfahrensabfolge bei Laserauftragsschweißen bzw. additive manufacturing.
Das gesamte Werkstück kann in einer Schutzgasatmosphäre positioniert werden, so dass der Schutz vor Oxidation, welche in Folge der Werkstück-Erwärmung durch den Laser im Rahmen des Auftragsverschweißens auftreten kann, weiter verbessert wird.

Insbesondere kann auch eine Oxidation an den Abschnitten des Werkstücks verhindert werden, die nicht unmittelbar durch das Schutzgas, das aus der Pulverdüse des Laserkopfs austritt, abgedeckt werden.

Ein weiterer wesentlicher Vorteil der verfahrbaren Schutzgasvorrichtung liegt darin, dass im Vergleich zu stationär an der Werkzeugmaschine installierten Schutzgaskammern, eine nichtstationäre Schutzgasvorrichtung in einfacher Weise ausgewechselt werden kann, so dass etwa die Größe der Schutzgasvorrichtung an das betreffende Werkstück angepasst werden kann und somit der Schutzgasverbrauch im Hinblick auf das Werkstückvolumen dosierbar ist.

Ein weiterer wesentlicher Vorteil ergibt sich durch den Umstand, dass durch die Positioniervorrichtung zum Verfahren und Positionieren der Schutzgasvorrichtung die Werkzeugmaschine gleichzeitig besonders geeignet für die herkömmliche Metallbearbeitung etwa durch Bohren, Drehen, Fräsen ist, da die Werkzeugkonfiguration auf dem Arbeitstisch in einfacher Weise umgerüstet werden kann, indem die für die spanabhebende Bearbeitung grundsätzlich nicht notwendige Schutzgasvorrichtung vom Arbeitstisch abgehoben und verfahren wird.

Eine besonders vorteilhaft ausgestaltete Ausführungsform der erfindungsgemäßen Werkzeugmaschine weist eine Schutzgasvorrichtung auf, die eine Induktionsspule zur Erwärmung des Werkstücks umfasst. Insbesondere kann die Induktionsspule derart in der Schutzgasvorrichtung angeordnet sein, dass beim Aufsetzen der Schutzgasvorrichtung auf den Arbeitstisch durch die Positioniervorrichtung das Werkstück umfänglich von der Induktionsspule umschlossen wird.

Auf diese Weise wird es möglich, das Werkstück gezielt vorzuerwärmen. Durch die gleichzeitige Beschickung des durch die Schutzgasvorrichtung gebildeten Arbeitsraums mit Schutzgas wird eine Oxidation der gesamten Oberfläche des Werkstücks zuverlässig verhindert.

Bereits das Vorerwärmen des Werkstücks vor der Laserbearbeitung bringt signifikante Vorteile mit sich. Einerseits wird der Zeitraum zum Erreichen der benötigten Verschweißtemperaturen am Werkstück durch den Laser reduziert. Andererseits wird verhindert, dass das Werkstück in Folge der lokalen Laserbearbeitung über das gesamte Werkstückvolumen gesehen einen hohen Temperaturgradienten aufweist, der zum Verzug des Werkstückmaterials oder sogar zu Materialdefekten, wie beispielsweise Rissbildung, führen kann und die Maßhaltigkeit in Bezug auf die Form negativ beeinflussen kann.

Dieses ist insbesondere bei der heutzutage im Werkzeugmaschinenbereich notwendigen Präzision, die in Bezug auf die Werkstückgeometrie häufig im Mikrometerbereich (µm) liegt, von entscheidender Bedeutung.

Aufgrund der direkten Anordnung der Induktionsspule in der Schutzgasvorrichtung, wird es möglich, diese mitsamt der Schutzgasvorrichtung zu verfahren. Somit weist eine Werkzeugmaschine, die gleichzeitig zum spanabhebenden Bearbeiten eingerichtet ist, zusätzlich Vorteile in Bezug auf die benötigten Arbeitszeiten auf, da dem vorerwärmten Werkstück entsprechend eine verkürzte Dauer der Laserbearbeitung erzielbar ist. Im Ergebnis ist festzustellen, dass die erfindungsgemäße "mobile" Schutzgasvorrichtung mit integrierter Induktionsspule somit eine verkürzte Bearbeitungszeit bei einer erhöhten Bearbeitungsgenauigkeit ermöglicht.

Bei einer weiteren besonders vorteilhaften Ausführungsform der vorliegenden Erfindung ist der Laserkopf mit einer Werkzeugschnittstelle versehen und kann über diese Schnittstelle in eine Arbeitsspindel der Werkzeugmaschine eingewechselt werden. Erfindungsgemäß umfasst die Laserkopfpositioniervorrichtung dabei die Arbeitsspindel. Die Werkzeugschnittstelle ist beispielsweise als Hohlschaftkegel (HSK) oder als Steilkegel ausgebildet.

Die für das Verfahren und Positionieren der Schutzgasvorrichtung durch die Positioniervorrichtung notwendige Kinematik kann erfindungsgemäß auf unterschiedliche Weise realisiert werden:
Die Schutzgasvorrichtung kann ebenfalls eine übliche Werkzeugschnittstelle aufweisen, beispielsweise Hohlschaftkegel (HSK) oder Steilkegel, mittels derer die Schutzgasvorrichtung direkt in die Arbeitsspindel der Werkzeugmaschine eingewechselt werden kann. Dies bringt den Vorteil mit sich, dass keine separate Kinematik der Positioniervorrichtung zum Verfahren der Schutzgasvorrichtung erforderlich ist, was wiederum den notwendigen konstruktiven Aufwand begrenzt und für optimale Platzverhältnisse im Bereich des Arbeitstisches während der Bearbeitungssituation sorgt.

Eine Werkstückbearbeitung wird somit erfindungsgemäß durchgeführt, indem die in die Arbeitsspindel aufgenommene Schutzgasvorrichtung über ein Werkstück auf dem Arbeitstisch verfahren und auf dem Arbeitstisch positioniert wird. Die Schutzgasvorrichtung wird aus der Arbeitsspindel gelöst, wobei die Schutzgasvorrichtung auf dem Arbeitstisch verbleibt und das Werkstück umgibt. Der Laserkopf wird in die Werkzeugschnittstelle der Arbeitsspindel eingewechselt und zur Laserschweißung an das Werkstück in der Schutzgasvorrichtung verfahren.

Alternativ hierzu kann die Schutzgasvorrichtung jedoch auch mit einer Verfahr- oder Positioniervorrichtung ausgestattet sein, die von der Arbeitsspindel verschieden ist. Eine derartige Konstruktion birgt den Vorteil, dass beispielweise parallel Arbeitsschritte mittels der Arbeitsspindel durchgeführt werden können, zur gleichen Zeit zu der die Schutzgasvorrichtung auf dem Arbeitstisch positioniert wird. Beispielsweise kann die Schutzgasvorrichtung hierzu an einem Schlitten geführt werden, der über den Arbeitstisch verfährt, woraufhin die Schutzgasvorrichtung auf dem Arbeitstisch abgesetzt wird.

Bei einer besonders vorteilhaften Ausgestaltung verfügt die erfindungsgemäße Werkzeugvorrichtung über eine beispielsweise an horizontalen Führungsschienen geführte Transportvorrichtung zum Zustellen der Schutzgasvorrichtung an eine Übergabeposition, an der Sie beispielsweise von der Arbeitsspindel mittels einer üblichen Werkzeugschnittstelle aufgenommen werden kann. Eine derartige Vorrichtung birgt den wesentlichen Vorteil, dass die Schutzgasvorrichtung mittels der Transportvorrichtung auch außerhalb des Arbeitsraums, ja sogar außerhalb des Kabinenraums, der den Arbeitsraum begrenzt, verfahren werden kann und somit der Platz im Bereich des Arbeitsraums nicht unnötig eingeschränkt wird.

Zur Optimierung der Raumverhältnisse im Bereich des Arbeitsraums kann dabei der Laserkopf ebenfalls über die Transportvorrichtung aufgenommen und in den Arbeitsraum hinein zugestellt werden bzw. aus diesem heraus und sogar außerhalb des Kabinenraums verfahren werden. Beispielsweise können zu diesem Zweck die Schutzgasvorrichtung und der Laserkopf gemeinsam auf der Transportvorrichtung entnehmbar gelagert sein.

Unabhängig davon, ob eine Transportvorrichtung zur Verfügung steht, können auch die Schutzgasvorrichtung und der Laserkopf miteinander konstruktiv zusammengefasst werden, beispielsweise etwa in dem die Schutzgasvorrichtung seitlich am Gehäuse des Laserkopfs lösbar angeordnet ist. Diese Variante ist besonders platzsparend und es sind weniger Einwechselvorgänge in die Arbeitsspindel erforderlich, da im Grunde genommen Laserkopf und Schutzgasvorrichtung gemeinsam eingewechselt werden können, etwa über eine Werkzeugschnittstelle des Laserkopfes in der Arbeitsspindel. Mit anderen Worten fungiert in diesem Fall die Arbeitsspindel sowohl als Positioniervorrichtung zum Verfahren und Positionieren der Schutzgasvorrichtung im Sinne des Patentanspruchs 1, als auch als Element der Laserkopfpositioniervorrichtung zum Positionieren des Laserkopfs in Bezug auf das Werkstück.

Bei dieser Ausgestaltung, bei der Laserkopf und Schutzgasvorrichtung miteinander konstruktiv zusammengefasst sind, zum Zustellen beider Funktionskomponenten an die Laserkopfpositioniereinrichtung mittels der Transportvorrichtung, aber auch bei anderen Ausführungsformen, kann es sinnvoll sein, dass eine erfindungsgemäße Positioniervorrichtung zum Verfahren und Positionieren der Schutzgasvorrichtung zusätzlich eine Greifvorrichtung mit einem Greifarm aufweist, mittels dessen die Schutzgasvorrichtung verfahren und positioniert werden kann.

Auf diese Weise ist es beispielsweise möglich, Laserkopf und die lösbar angeordnete Schutzgasvorrichtung gemeinsam über die Transportvorrichtung in den Bereich des Arbeitsraums zuzustellen, den Laserkopf in die Werkzeugschnittstelle einzuführen und nachfolgend mittels der Greifvorrichtung die Schutzgasvorrichtung genau über dem Werkstück zu positionieren.

Bei einer besonders einfach ausgestalten Ausführungsform der vorliegenden Erfindung ist die Greifvorrichtung gleichzeitig Positioniervorrichtung zum Verfahren und Positionieren der Schutzgasvorrichtung und kann gegebenenfalls auch völlig unabhängig von dem Mechanismus zum Bewegen des Laserkopfs verfahren und positioniert werden.

In diesem Zusammenhang sei darauf hingewiesen, dass die Bezeichnung "Greifvorrichtung" keinesfalls als in konstruktiver Hinsicht beschränkend auf einen Greifmechanismus im engeren Sinne verstanden sein soll. Vielmehr steht der Begriff "Greif-" für das Erzeugen einer lösbaren Verbindung zwischen der (Greif) Vorrichtung und Schutzgasvorrichtung unabhängig davon, ob eine Greifzange, ein Einklinkmechanismus oder ein anderer konstruktiver Mechanismus zur Erzeugung der lösbaren Verbindung Verwendung findet.

Vorzugsweise weist die Schutzgasvorrichtung ein zylindrisches Gehäuse auf. Unabhängig von der Gehäuseform kann das Gehäuse der Schutzgasvorrichtung eine Zuleitung für ein Schutzgas und ein steuerbares Ventil zur Befüllung der Schutzgasvorrichtung mit dem Schutzgas umfassen.

Zudem kann an der Unterseite der Schutzgasvorrichtung eine elastische Dichtung vorgesehen sein, mittels derer eine Kontaktfläche zwischen der auf dem Arbeitstisch positionierten Schutzgasvorrichtung und dem Arbeitstisch abgedichtet werden kann. Auf diese Weise kann verhindert werden, dass das Schutzgas, welches eine höhere Dichte als Luft aufweist, durch eine Spaltbildung an der Unterseite der Schutzgasvorrichtung entweichen kann.

Um die Schutzgasvorrichtung nach der Positionierung auf dem Arbeitstisch an der Absetzposition ortsfest zu fixieren, kann ein Aufspannmechanismus vorgesehen sein, der dies gewährleistet. Auch hier ist der Begriff "Aufspannen" als üblicher technischer Fachbegriff des Werkzeugmaschinenbaus zu verstehen und nicht in konstruktiv einschränkender Weise. Geeignet ist jede beliebige Einrichtung, die eine Fixierung der Schutzgasvorrichtung auf dem Arbeitstisch ermöglicht. Diese Fixierung kann beispielsweise mechanisch, pneumatisch, magnetisch oder durch Vakuum erfolgen.

Zur Umsetzung der vorliegenden Erfindung kann die erfindungsgemäße Werkzeugmaschine mit einer Steuereinrichtung zur Vorgabe eines Bearbeitungsablaufs ausgestattet sein, der die Schritte umfasst:
Positionieren einer Schutzgasvorrichtung mittels einer Positioniervorrichtung an einer ersten Position eines Arbeitstisches, derart dass die Schutzgasvorrichtung ein auf dem Arbeitstische aufgespanntes erstes Werkstück umschließt, Befüllen der Schutzgasvorrichtung mit Schutzgas, Positionieren eines Laserkopfs mittels einer Laserkopfpositioniervorrichtung in einer Arbeitsposition im Bereich des Werkstücks zur Bearbeitung des Werkstücks durch Auftragen und Verschweißen eines Materials, Bearbeiten des Werkstücks mittels des Laserkopfs unter Schutzgasatmosphäre, Verfahren des Laserkopfs nach Werkstückbearbeitung durch die Laserkopfpositioniervorrichtung, Abheben der Schutzgasvorrichtung von dem Arbeitstisch mittels der Positioniervorrichtung, Positionieren einer Schutzgasvorrichtung an einer zweiten Position auf dem Arbeitstisch an dem ein zweites Werkstück aufgespannt ist, und Wiederholen der oben genannte Schritte.

Auf diese Weise kann es ermöglicht werden, mehrere Werkstücke in schneller Folge hintereinander durch Laserauftragsschweißen zu bearbeiten, ohne dabei die Schutzgasvorrichtung jedes Mal neu positionieren zu müssen. Außerdem wird es auf diese Weise ermöglicht, dass bereits ein zweites Werkstück bearbeitet wird, während das erste, schon bearbeitete Werkstück noch erkaltet. Grundsätzlich ist damit das erste, bereits bearbeitete Werkstück unmittelbar nach der Laserauftragsschweißbearbeitung für weitere Bearbeitungsschritte "freigegeben", so dass sich eine subtraktive Bearbeitung unmittelbar in der Folge anschließen kann.

Die erfindungsgemäß mittels der Positioniervorrichtung verfahrbar ausgestaltete "mobile" Schutzgasvorrichtung erlaubt daher die notwendigen Arbeitszeiten, insbesondere bei der Kombination subtraktiver und additiver Bearbeitungsverfahren an derselben Werkzeugmaschine erheblich zu verkürzen, da eine parallele Bearbeitung verschiedener auf dem Arbeitstisch aufgespannter Werkzeuge möglich wird. Gleichzeitig kann auf diese Weise die Formgenauigkeit erheblich gesteigert werden, da durch die erfindungsgemäß eingerichtete Werkzeugmaschine sichergestellt wird, dass die Ausbildung von Temperaturgradienten in Folge der Laserbearbeitung durch das Vorerwärmen des Werkstücks bei der Laserauftragsschweißbearbeitung reduziert wird und zudem eine spanende Bearbeitung nachgeschaltet werden kann, ohne dass diese spanende Bearbeitung an dem "heißen" Werkstück vorgenommen werden muss.

In diesem Zusammenhang offenbart die Erfindung auch ein Verfahren zum additiven und subtraktiven Bearbeiten eines Werkstücks an einer Werkzeugmaschine, das die Schritte umfasst: Positionieren einer Schutzgasvorrichtung mittels einer Positioniervorrichtung an einer ersten Position eines Arbeitstisches, derart, dass die Schutzgasvorrichtung ein auf dem Arbeitstisch aufgespanntes erstes Werkstück umschließt, Befüllen der Schutzgasvorrichtung mit Schutzgas, Positionieren eines Laserkopfs mittels der Laserkopfpositioniervorrichtung in einer Arbeitsposition im Bereich des Werkstücks zur additiven Bearbeitung des Werkstücks durch Laserauftragsschweißen, additives Bearbeiten des Werkstücks durch Laserauftragsschweißen mittels des Laserkopfs unter Schutzgasatmosphäre, Verfahren des Laserkopfs nach Werkstückbearbeitung durch die Laserkopfpositioniervorrichtung, Abheben der Schutzgasvorrichtung von dem Arbeitstisch mittels der Positioniervorrichtung, und subtraktives Bearbeiten des Werkstücks beispielsweise durch Bohren, Drehen, Fräsen vor oder nach vollständiger Erkaltung des Werkstücks.

Das Verfahren kann weiterhin die Schritte Positionieren der Schutzgasvorrichtung an einer zweiten Position auf dem Arbeitstisch an dem ein zweites Werkstück aufgespannt ist, und Wiederholen der genannten Schritte zur Laserauftragsbearbeitung umfassen.

Bei dem erfindungsgemäßen Verfahren kann die spanabhebende Bearbeitung des ersten Werkstücks zeitlich in unmittelbarer Abfolge zu der Bearbeitung eines zweiten Werkstücks durch Laserauftragsschweißen erfolgen.

Die genannten Bearbeitungs- bzw. Verfahrensschritte sind selbstverständlich nicht auf zwei Werkstücke begrenzt. Vielmehr können mehrere zur gleichen Zeit auf dem Arbeitstisch aufgespannte Werkstücke oder nacheinander auf dem Arbeitstisch aufgespannte Werkstücke in dieser Abfolge bearbeitet werden.

Im Folgenden werden Beispiele der vorliegenden Erfindung unter Bezugnahme auf die Figuren beschrieben. Gleiche bzw. ähnliche Elemente in den Figuren können hierbei mit gleichen Bezugszeichen bezeichnet sein.
Fig. 1 zeigt eine schematische Perspektivdarstellung einer Werkzeugmaschine gemäß einem ersten Ausführungsbeispiel der Erfindung.
Fig. 2 zeigt eine schematische Darstellung des Funktionsprinzips des Laserauftragsschweißens gemäß einem Ausführungsbeispiel der Erfindung.
Fig. 3 zeigt ein alternatives zweites Ausführungsbeispiel der erfindungsgemäßen Werkzeugmaschine, bei der die Schutzgasvorrichtung mit einer separaten Transportvorrichtung positioniert wird.
Fig. 4 zeigt eine schematische Darstellung eines Abschnitts einer erfindungsgemäßen Werkzeugmaschine.
Fig. 5 zeigt eine schematische Perspektivdarstellung der Aufnahme des Laserkopfes in eine Arbeitsspindel gemäß dem ersten Ausführungsbeispiel der Erfindung.
Fig. 6 zeigt eine schematische Perspektivdarstellung des aufgenommenen Laserkopfes in der Arbeitsspindel gemäß einem Ausführungsbeispiel der Erfindung.

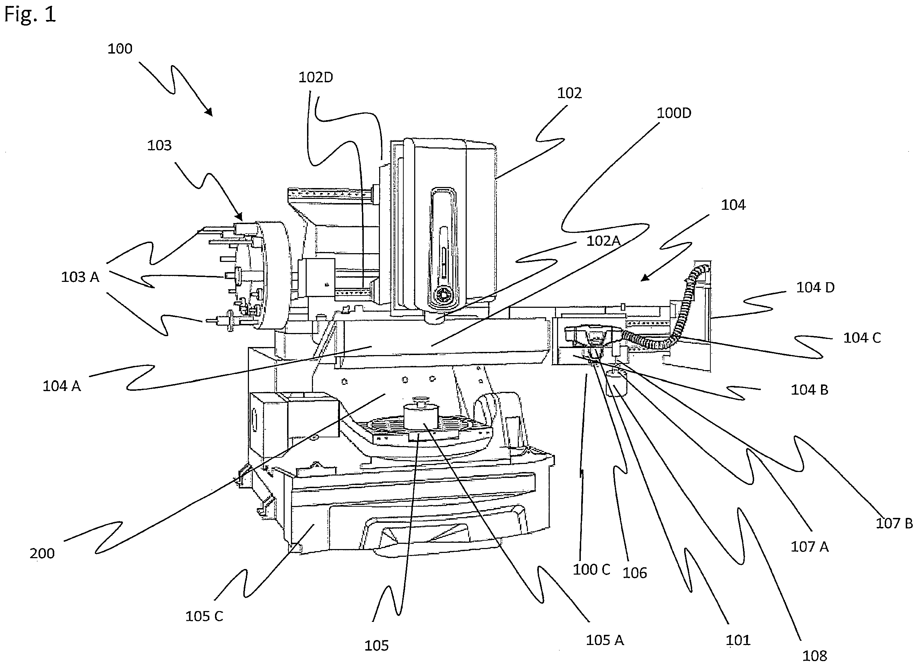

Fig. 1 zeigt eine schematische Perspektivdarstellung einer Werkzeugmaschine 100 mit einem verfahrbaren Laserkopf 101, einer Aufnahmevorrichtung 102, die als Arbeitsspindel mit Hohlschaftkegelschnittstelle (HSK) ausgebildet ist, zur Aufnahme und Positionierung des Laserkopfes oder subtraktiver Bearbeitungswerkzeuge 103A gemäß einem Ausführungsbeispiel der Erfindung. Die subtraktiven Bearbeitungswerkzeuge 103A sind zweckmäßig in einem Werkzeugmagazin 103 der Werkzeugmaschine 100 gelagert. Weiterhin ist ein Arbeitstisch 105 zum Bereitstellen von mindestens einem Werkstück 105A zur Bearbeitung vorhanden. Der Arbeitstisch ist drehbar auf einem Maschinenbett 105C der Werkzeugmaschine 100 gelagert.

Der Laserkopf 101 dieses Ausführungsbeispiels ist mittels einer Transportvorrichtung 104 von einer ersten beliebigen Position 100C zu einer zweiten Position 100D derart verfahrbar, so dass er von der Arbeitsspindel 102 aufgenommen werden kann. Der Laserkopf 101 ist hierzu auf einem Verfahrabschnitt (Schlitten) 104B angeordnet und wird entlang einer horizontalen Führungsschiene 104A von der ersten in die zweite Position verfahren. An dem Laserkopf ist zudem eine flexible Zuleitung 104C zum Einbringen des Schweißmaterials in die Pulverdüse 106 des Laserkopfes angebracht. Die Zuleitung 104C wird beim Verfahren des Laserkopfes 101 nachgeführt. Die Arbeitsspindel 102 ist an zwei Horizontalführungen 102D gelagert. Alternativ kann die Arbeitsspindel 102 mit Werkzeugen 103A aus dem Werkzeugmagazin 103 der Werkzeugmaschine bestückt werden, um beispielsweise fräsende Bearbeitungsschritte an einem Werkstück 105A durchzuführen.

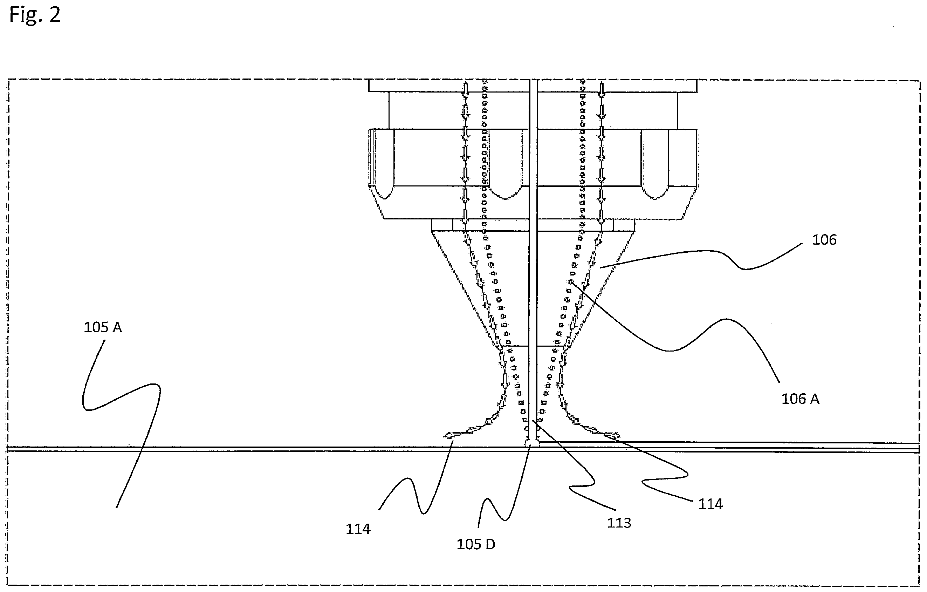

Fig. 2 zeigt das Funktionsprinzip des Laserauftragsschweißens bei einer erfindungsgemäßen Werkzeugmaschine. Aus der Pulverdüse 106 wird der Laserstrahl 113 auf eine Schweißposition 105D der Oberfläche des zu bearbeitenden Werkstücks 105A gelenkt und verschweißt schichtweise aufgetragenes Pulver 106A mit dem Werkstück 105A. Während des Schweißvorgangs wird ein Schutzgas 114 aus der Düsenöffnung ausgestoßen, wodurch eine Oxidation um die Schweißstelle herum vermieden wird.

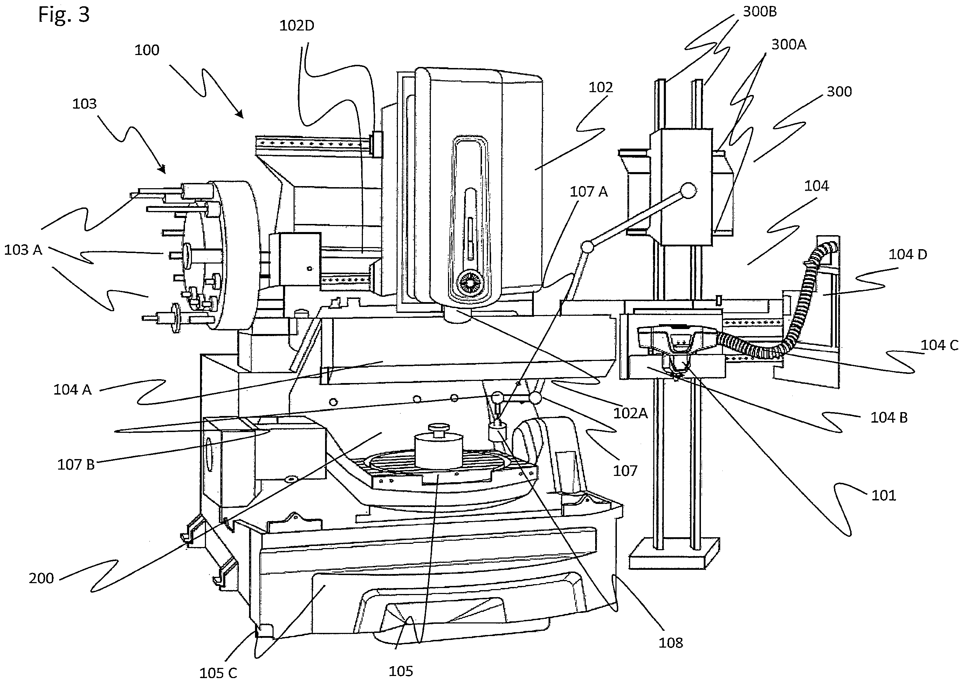

Fig. 3 zeigt eine alternative Ausbildung der erfindungsgemäßen Werkzeugmaschine 100. Bei dieser erfindungsgemäßen Ausführungsform der Transportvorrichtung 300 zum Verfahren der Schutzgasvorrichtung ist die Schutzgasvorrichtung 108 an einer Greifvorrichtung 107 mit einem Greifarm 107B und Greifzange 107A lösbar befestigt, wobei der Greifarm und Greifvorrichtung mit der Transportvorrichtung 300 verbunden sind. Die Greifvorrichtung ist ferner über Horizontalführungen 300A und Vertikalführungen 300B der Transportvorrichtung 300 relativ zum Arbeitstisch 105 der Werkzeugmaschine 100 und dem Werkstück verfahrbar. Somit können Laserkopf 101 und Schutzgasvorrichtung 108 unabhängig voneinander angesteuert und verfahren werden. Die Transportvorrichtung ist bei diesem Ausführungsbeispiel mit einer separaten Steuerung ausgestattet, die in die Transportvorrichtung 300 integriert ist.

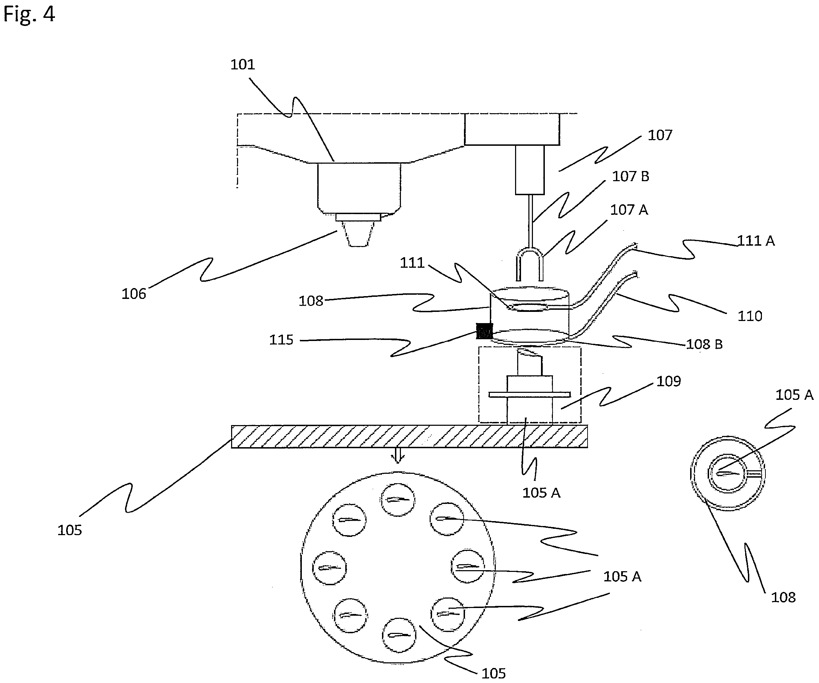

Fig. 4 zeigt eine schematische Darstellung des Laserkopfes 101 mit Pulverdüse 106 sowie eine Greifvorrichtung 107 mit Greifarm 107B und Greifzange 107A zum Aufnehmen, Positionieren und Absetzen einer Schutzgasvorrichtung 108 über ein Werkstück 105A, welches auf dem Arbeitstisch 105 eingespannt ist. Die Greifvorrichtung 107 ist am Laserkopf 101 angeordnet. Somit kann mittels der Arbeitsspindel auch die Greifvorrichtung zügig und exakt positioniert werden.

Auf dem Arbeitstisch 105 können eine Vielzahl von Werkstücken 105A eingespannt werden. Weiterhin zeigt Fig. 4 Details der Schutzgasvorrichtung 108, die über das zu bearbeitende Werkstück gefahren und abgesenkt wird, um einen Arbeitsraum 109 um das Werkstück 105A herum bereitzustellen, in der durch Schutzgaszufuhr 110 eine Schutzgasatmosphäre erzeugt wird. Durch die Dichtung 108B an der Unterseite der Schutzgasvorrichtung 108 wird ein Austritt von Schutzgas verhindert. Weiterhin wird mittels eines Aufspannmechanismus 115 zwischen Dichtung 108B und Oberfläche des Arbeitstisches 105 eine Fixierung der Schutzgasvorrichtung auf dem Arbeitstisch 105 gewährleistet.

Eine innerhalb der Schutzgasvorrichtung angeordnete Induktionsspule 111 mit Stromversorgung 111A, die beim Absetzen der Schutzgasvorrichtung 108 über das Werkstück 105A das Werkstück 105A ringartig umschließt, ermöglicht eine gleichmäßige Erwärmung des Werkstückes 105A. Somit können Temperaturgradienten an dem Werkstück verringert werden und Beschädigungen beim Schweißvorgang durch Verzug des ungleichmäßig erwärmten Werkstücks vermieden werden. Außerdem kann der Schweißprozess durch die Vorerwärmung des Materials schneller durchgeführt werden.

Die um das Werkstück 105A herum erzeugte Schutzgasatmosphäre bewirkt einen zusätzlichen Oxidationsschutz neben der durch die Pulverdüse mittels Schutzgasströmung erzeugbaren Schutzgasschicht an der Schweißposition. Es werden somit Oxidationsvorgänge an dem Werkstück an anderen Stellen der Werkstückoberfläche, die nicht der Laserschweißposition entsprechen, verhindert.

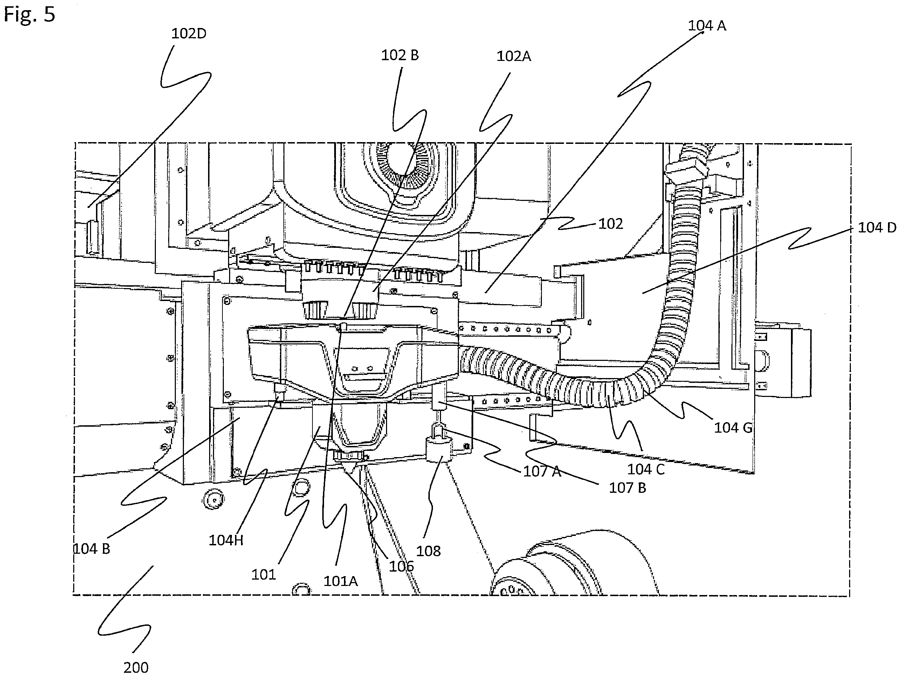

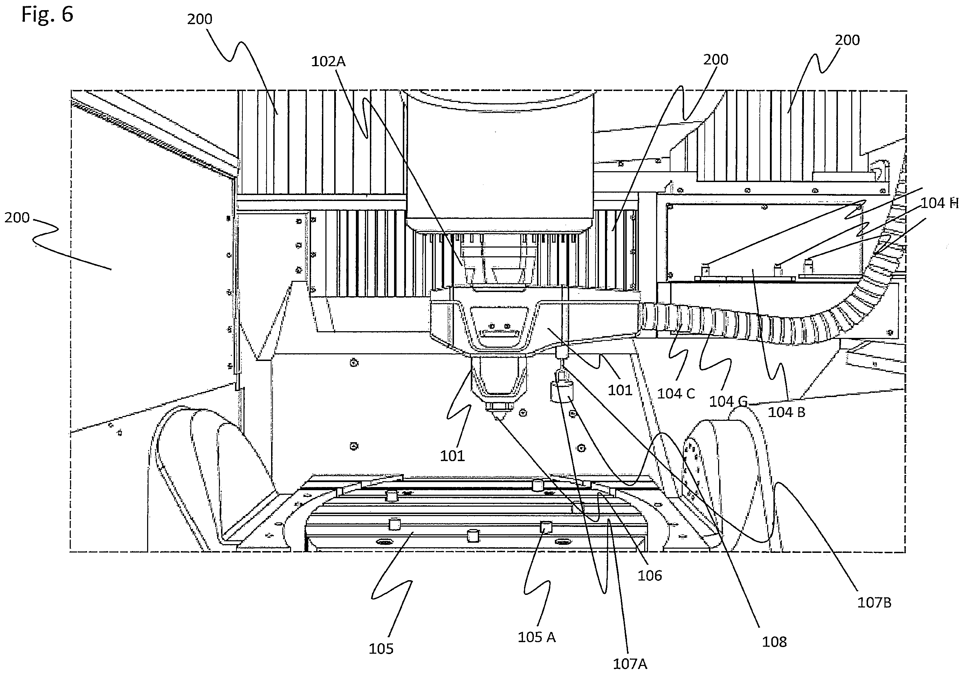

Fig. 5 und Fig. 6 zeigen die Aufnahme des Laserkopfes 101 mit Pulverdüse 106 in den Spindelkopf 102A der Arbeitsspindel 102. Der Laserkopf 101 wird an dem Schlitten 104B mittels Stützzapfen 104H gehalten, die in Öffnungen (nicht sichtbar) an dem Laserkopf 101 eingreifen. Der Laserkopf 101 wird mittels der Führungsschiene 104A zum Spindelkopf 102A heranverfahren und in den Spindelkopf 102A eingeführt. Dabei wird der Spindelzapfen 101A des Laserkopfs 101 in die Spindelkopföffnung 102B eingeführt. Der Laserkopf 101 ist mittels einer nachführbaren Zuleitung 104C, mit einem Pulverreservoir (nicht dargestellt) verbunden, um die Pulverdüse 106 mit Material zum Auftragsschweißen zu versorgen. Die Zuleitung 104C umfasst voneinander beabstandete flexible Ringsegmente 104G. Nach der Kopplung des Laserkopfes 101 mit dem Spindelkopf 102A wird eine Schutzplatte 104D zur Absicherung des Schweißbereichs bündig mit dem Schlitten 104B zusammengeführt. Dadurch wird zusammen mit Wänden 200 ein räumlich separierter Arbeitsbereich innerhalb der Kabine bereitgestellt. In dem mit der Arbeitsspindel gekoppelten Zustand ist der Laserkopf 101 bewegbar für eine Fünf-Achsenbearbeitung eines Werkstücks 105A auf dem Arbeitstisch 105 eingerichtet. Der Spindelkopf 102A kann den Laserkopf 101 in beliebiger Position relativ zu einem auf dem Arbeitstisch 105 befindlichen Werkstück 105A positionieren. Gemäß dem dargestellten Ausbildungsbeispiel der Erfindung bilden die Arbeitsspindel 102, der Arbeitsspindelkopf 102A und die Horizontalführung 102D die Elemente der erfindungsgemäßen Laserkopfpositioniervorrichtung. An dem Laserkopf 101 ist die Schutzgasvorrichtung 108 angeordnet. Die Laserschweißbearbeitung wird in der Arbeitskabine durchgeführt, die von den Wänden 200 und der Schutzplatte 104D umfasst ist und den Arbeitsbereich somit von der Außenumgebung separiert.

Die Figuren 1 - 6 zeigen eine erfindungsgemäße Werkzeugmaschine oder deren Elemente, die es somit ermöglicht eine Vielzahl von Werkstücken 105A, die auf dem Arbeitstisch 105 aufgespannt sind, in zeitlich kurzer Folge additiv und subtraktiv zu bearbeiten. Dazu wird die Schutzgasvorrichtung 108 mittels der Greifvorrichtung über dem zu bearbeitenden Werkstück positioniert und abgesetzt. Der am Spindelkopf befestigte Laserkopf 101 wird an die Position der Schutzgasvorrichtung 108 verfahren und mittels des Spindelkopfes 102A in den Arbeitsraum 109 der Schutzgasvorrichtung verfahren. Eine Schutzgasatmosphäre wird um das Werkstück 105A mittels Einleiten eines Schutzgases über die Zuleitung 110 in die Schutzgasvorrichtung 108 erzeugt. Durch die das Werkstück umfassende Induktionsspule 111 der Schutzgasvorrichtung 108 wird das Werkstück erhitzt und ein additives Bearbeiten (Laserauftragsschweißen) des Werkstücks 105A wird an dem Werkstück durchgeführt. Nach der Laserbearbeitung wird der Laserkopf 101 aus der Schutzgasvorrichtung herausgefahren, die Schutzgasvorrichtung 108 von dem Werkstück 105A mittels der Greifvorrichtung 107 abgehoben und zur Position eines auf dem Arbeitstisch 105 aufgespannten zweiten Werkstücks verfahren und darüber abgesetzt und das erste Werkstück 105A einer subtraktiven Bearbeitung, beispielsweise durch Bohren, Drehen oder Fräsen vor oder nach vollständiger Erkaltung des ersten Werkstücks 105A, unterzogen.

Der oben beschriebene Arbeitsprozess wird nun mit einer Anzahl oder allen auf dem Arbeitstisch 105 aufgespannten Werkstücken 105A wiederholt. Nach Beendigung des additiven Bearbeitens durch Laserauftragsschweißen können die bearbeiteten und abgekühlten Werkstücke 105A einem subtraktiven Arbeitsprozess unterzogen werden. Dazu wird der Laserkopf auf den Laserkopfstützzapfen 104H des Schlittens 104B angeordnet, aus der Arbeitsspindel 102 gelöst und mittels der Führungsschiene 104A zu einer Aufbewahrungsposition 100C des Laserkopfes 101 verfahren. Dann wird ein Werkzeugkopf 103A aus dem Werkzeugmagazin 103 der Werkzeugmaschine in die Arbeitsspindel zugeführt und der Werkzeugkopf 103A wird an die Position des Werkstücks 105A gefahren, um beispielsweise eine Fräsbearbeitung an dem Werkstück 105A durchzuführen.

Die vorliegende Erfindung ist nicht auf die beschriebenen Ausführungsbeispiele und deren Merkmale begrenzt, sondern umfasst auch Modifikationen der Ausführungsbeispiele, die durch Kombination von Merkmalen der beschriebenen Beispiele im Rahmen des Schutzumfangs der unabhängigen Ansprüche umfasst sind, soweit diese im Bereich des Fachwissens des Durchschnittsfachmann liegen.

## Patentansprüche

1. Werkzeugmaschine (100) mit:
- einem Arbeitstisch (105) zum Aufspannen von mindestens einem Werkstück (105A)
- einem Laserkopf (101) mit einer Pulverdüse (106) zum Auftragen eines Materials auf das Werkstück und zum Verschweißen des Materials mit dem Werkstück (105A)
- einer Laserkopfpositioniervorrichtung zum Positionieren des Laserkopfs in Bezug auf das Werkstück zur Bearbeitung des Werkstücks (105A) durch Auftragen und Verschweißen des aufgebrachten Materials,
und **gekennzeichnet durch**:
- eine mit einem Schutzgas befüllbare Schutzgasvorrichtung (108) zur Bearbeitung des Werkstücks (105A) durch den Laserkopf (101) unter Schutzgasatmosphäre, und
- eine Positioniervorrichtung zum Verfahren und Positionieren der Schutzgasvorrichtung (108) auf dem Arbeitstisch (105),
wobei die Schutzgasvorrichtung (108) lösbar von der Positioniervorrichtung ist,
die Positioniervorrichtung zum Absetzen der Schutzgasvorrichtung (108) auf den Arbeitstisch (105) eingerichtet ist, und der Laserkopf durch die Laserkopfpositioniervorrichtung zum Auftragen und Verschweißen des aufgebrachten Materials in die Schutzgasvorrichtung (108) verfahrbar ist.

2. Werkzeugmaschine nach Anspruch 1, **dadurch gekennzeichnet, dass** die Schutzgasvorrichtung (108) eine Induktionsspule (111) zum Erwärmen des Werkstücks umfasst.

3. Werkzeugmaschine nach Anspruch 2, **dadurch gekennzeichnet, dass** die Induktionsspule (111) derart in der Schutzgasvorrichtung (108) angeordnet ist, dass beim Aufsetzen der Schutzgasvorrichtung (108) auf den Arbeitstisch (105) durch die Positioniervorrichtung das Werkstück umfänglich von der Induktionsspule (111) umschlossen wird.

4. Werkzeugmaschine (100) nach einem der vorhergehenden Ansprüche, **dadurch gekennzeichnet, dass** der Laserkopf (101) mit einer Werkzeugschnittstelle versehen ist und über diese Schnittstelle in eine Arbeitsspindel der Werkzeugmaschine (100) eingewechselt werden kann.

5. Werkzeugmaschine (100) nach einem der vorhergehenden Ansprüche, **dadurch gekennzeichnet, dass** die Schutzgasvorrichtung (108) mit einer Werkzeugschnittstelle versehen ist und über diese Schnittstelle in eine Arbeitsspindel (102) eingewechselt werden kann.

6. Werkzeugmaschine (100) nach einem der vorhergehenden Ansprüche, **dadurch gekennzeichnet, dass** die Positioniereinrichtung über eine von der Arbeitsspindel (102) separate Kinematik verfügt, mittels derer die Schutzgasvorrichtung (108) verfahren und positioniert werden kann.

7. Werkzeugmaschine nach einem der vorhergehenden Ansprüche, **dadurch gekennzeichnet, dass** die Positioniervorrichtung zum Verfahren und Positionieren der Schutzgasvorrichtung als Greifvorrichtung (107) mit einem Greifarm (107a) ausgebildet ist, mittels dessen die Schutzgasvorrichtung (108) aufgenommen, verfahren und positioniert werden kann.

8. Werkzeugmaschine (100) nach Anspruch 7, **dadurch gekennzeichnet, dass** die Greifvorrichtung (107) am Gehäuse des Laserkopfs (101) angeordnet ist.

9. Werkzeugmaschine nach einem der vorhergehenden Ansprüche, **dadurch gekennzeichnet, dass** das Gehäuse der Schutzgasvorrichtung (108) eine Zuleitung (110) für ein Schutzgas und ein steuerbares Gasventil zur Befüllung der Schutzgasvorrichtung mit Schutzgas umfasst.

10. Werkzeugmaschine (100) nach einem der vorhergehenden Ansprüche, **dadurch gekennzeichnet, dass** an der Unterseite der Schutzgasvorrichtung (108) eine elastische Dichtung (108B) vorgesehen ist, mittels derer eine Kontaktfläche zwischen der auf dem Arbeitstisch (105) positionierten Schutzgasvorrichtung (108) und dem Arbeitstisch (105) abgedichtet werden kann.

11. Werkzeugmaschine (100) nach einem der vorhergehenden Ansprüche, **dadurch gekennzeichnet, dass** die Schutzgasvorrichtung (108) einen Aufspannmechanismus (115) umfasst, mittels dessen die Schutzgasvorrichtung (108) ortsfest auf dem Arbeitstisch (105) aufgespannt werden kann.

12. Werkzeugmaschine nach einem der vorhergehenden Ansprüche, **gekennzeichnet durch** eine Steuereinrichtung zur Vorgabe eines Bearbeitungsablaufs mit den Schritten
- Positionieren der Schutzgasvorrichtung (108) mittels der Positioniervorrichtung an einer ersten Position des Arbeitstischs (105), derart dass die Schutzgasvorrichtung (108) ein auf dem Arbeitstisch aufgespanntes erstes Werkstück umschließt,
- Befüllen der Schutzgasvorrichtung mit Schutzgas,
- Positionieren des Laserkopfs mittels der Laserkopfpositioniervorrichtung in eine Arbeitsposition im Bereich des Werkstücks zur Bearbeitung,
- Bearbeiten des Werkstücks (105A) mittels des Laserkopfs (101) unter Schutzgasatmosphäre,
- Verfahren des Laserkopfs (101) nach Werkstückbearbeitung durch die Laserkopfpositioniervorrichtung,
- Abheben der Schutzgasvorrichtung von dem Arbeitstisch mittels der Positioniervorrichtung (107) und gegebenenfalls
- Positionieren der Schutzgasvorrichtung (108) an einer zweiten Position auf dem Arbeitstisch (105), wo ein zweites Werkstück (105A) aufgespannt ist, und
- Wiederholen der oben genannten Schritte.

13. Verfahren zum additiven und subtraktiven Bearbeiten eines Werkstücks (105A) an einer Werkzeugmaschine (100), umfassend die Schritte:
- Positionieren einer Schutzgasvorrichtung (108) mittels einer Positioniervorrichtung an einer ersten Position eines Arbeitstisches (105), derart, dass die Schutzgasvorrichtung ein auf dem Arbeitstisch aufgespanntes erstes Werkstück (105A) umschließt,
wobei die Schutzgasvorrichtung (108) lösbar von der Positioniervorrichtung ist, derart, dass die Schutzgasvorrichtung (108) auf dem Arbeitstisch (105) abgesetzt wird,
- Befüllen der Schutzgasvorrichtung (108) mit Schutzgas,
- Positionieren eines Laserkopfs (101) mittels der Laserkopfpositioniervorrichtung in einer Arbeitsposition im Bereich des Werkstücks (105A) zur additiven Bearbeitung des Werkstücks durch Laserauftragsschweißen,
wobei der Laserkopf durch die Laserkopfpositioniervorrichtung zum Auftragen und Verschweißen des aufgebrachten Materials in die Schutzgasvorrichtung (108) verfahren wird,
- additives Bearbeiten des Werkstücks (105) durch Laserauftragsschweißen mittels des Laserkopfs (101) unter Schutzgasatmosphäre,
- Verfahren des Laserkopfs (101) nach Werkstückbearbeitung durch die Laserkopfpositioniervorrichtung,
- Abheben der Schutzgasvorrichtung (108) von dem Arbeitstisch (105) mittels der Positioniervorrichtung, und
- subtraktives Bearbeiten des Werkstücks (105A) beispielsweise durch Bohren, Drehen, Fräsen vor oder nach vollständiger Erkaltung des Werkstücks.

14. Verfahren zum additiven und subtraktiven Bearbeiten eines Werkstücks (105A) an einer Werkzeugmaschine (100) nach Anspruch 13, weiterhin die Schritte umfassend:
- Positionieren der Schutzgasvorrichtung (108) an einer zweiten Position auf dem Arbeitstisch (105) an dem ein zweites Werkstück aufgespannt ist, und
- Wiederholen der genannten Schritte des Laserauftragsschweißens.

## Claims

1. A machine tool (100), comprising:
- a work table (105) for clamping at least one workpiece (105A);
- a laser head (101) including a powder nozzle (106) for applying a material to the workpiece and for welding the material to the workpiece (105A);
- a laser head positioning device for positioning said laser head with respect to the workpiece for machining the workpiece (105A) by applying and welding the applied material, and
**characterized by**:
- a protective gas device (108) which can be filled with a protective gas for machining the workpiece (105A) by means of said laser head (101) under a protective gas atmosphere, and
- a positioning device for displacing and positioning said protective gas device (108) on said work table (105),
wherein said protective gas device (108) is detachable from said positioning device,
said positioning device is configured to place said protective gas device (108) on said work table (105), and
said laser head is displaceable into said protective gas device (108) by means of said laser head positioning device for applying and welding the applied material.

2. The machine tool according to claim 1, **characterized in that** said protective gas device (108) comprises an induction coil (111) for heating the workpiece.

3. The machine tool according to claim 2, **characterized in that** said induction coil (111) is arranged in said protective gas device (108) such that, when placing said protective gas device (108) on said work table (105) by means of said positioning device, said workpiece is enclosed circumferentially by said induction coil (111).

4. The machine tool (100) according to one of the preceding claims, **characterized in that** said laser head (101) is provided with a tool interface and can be substituted in a working spindle of said machine tool (100) via said interface.

5. The machine tool (100) according to any one of the preceding claims, **characterized in that** said protective gas device (108) is provided with a tool interface and can be substituted in a work spindle (102) via said interface.

6. The machine tool (100) according to one of the preceding claims, **characterized in that** said positioning device has kinematics separate from said work spindle (102), by means of which kinematics said protective gas device (108) can be displaced and positioned.

7. The machine tool according to one of the preceding claims, **characterized in that** said positioning device for displacing and positioning said protective gas device is configured as a gripping device (107) with a gripping arm (107a), by means of which said protective gas device (108) can be picked up, displaced and positioned.

8. The machine tool (100) according to claim 7, **characterized in that** said gripping device (107) is arranged on the housing of said laser head (101).

9. The machine tool according to one of the preceding claims, **characterized in that** the housing of said protective gas device (108) comprises a feed line (110) for a protective gas and a controllable gas valve for filling said protective gas device with protective gas.

10. The machine tool (100) according to one of the preceding claims, **characterized in that**, on the bottom side of said protective gas device (108), an elastic seal (108 B) is provided, by means of which a contact surface between said protective gas device (108) positioned on said work table (105) and said work table (105) can be sealed.

11. The machine tool (100) according to one of the preceding claims, **characterized in that** said protective gas device (108) comprises a clamping mechanism (115), by means of which said protective gas device (108) can be clamped on said work table (105) in a positionally fixed manner.

12. The machine tool according to one of the preceding claims, **characterized by** a control device for specifying a machining sequence comprising the steps of:
- positioning said protective gas device (108) at a first position of said work table (105) by means of said positioning device such that said protective gas device (108) encloses a first workpiece clamped on said work table,
- filling said protective gas device with protective gas,
- positioning said laser head by means of said laser head positioning device at a work position in the region of the workpiece for machining,
- machining the workpiece (105A) by means of said laser head (101) under a protective gas atmosphere,
- displacing said laser head (101) by means of said laser head positioning device after the workpiece has been machined,
- lifting said protective gas device from said work table by means of said positioning device (107), and optionally
- positioning said protective gas device (108) at a second position on said work table (105) where a second workpiece (105A) is clamped, and
- repeating the above steps.

13. A method for additively and subtractively machining a workpiece (105A) on a machine tool (100), comprising the steps of:
- positioning a protective gas device (108) at a first position of a work table (105) by means of a positioning device such that said protective gas device encloses a first workpiece (105A) clamped on said work table,
- filling said protective gas device (108) with protective gas,
- positioning a laser head (101) at a working position in the region of the workpiece (105A) by means of said laser head positioning device for additive machining of the workpiece by laser deposition welding;
wherein said laser head is displaced into said protective gas device (108) by means of said laser head positioning device for applying and welding the applied material,
- additively machining the workpiece (105) by laser deposition welding by means of said laser head (101) under a protective gas atmosphere;
- displacing said laser head (101) by means of said laser head positioning device after the workpiece has been machined,
- lifting said protective gas device (108) from said work table (105) by means of said positioning device, and
- subtractively machining the workpiece (105A), for example by drilling, turning, milling, before or after the workpiece has cooled down completely.

14. A method for additively and subtractively machining a workpiece (105A) on a machine tool (100) according to claim 13, further comprising the steps of:
- positioning said protective gas device (108) at a second position on said work table (105) on which a second workpiece is clamped, and
- repeating said steps of laser deposition welding.

## Revendications

1. Machine-outil (100) avec :
- une table de travail (105) pour fixer au moins une pièce à usiner (105A)
- une tête de laser (101) avec une buse de poudre (106) pour appliquer un matériau sur la pièce à usiner et pour souder le matériau avec la pièce à usiner (105A)
- un dispositif de positionnement de tête de laser pour positionner la tête de laser par rapport à la pièce à usiner pour travailler la pièce à usiner (105A) par application et soudage du matériau appliqué, et
**caractérisée par** :
- un dispositif de protection gazeuse (108) pouvant être rempli avec un gaz de protection pour le travail de la pièce à usiner (105A) par la tête de laser (101) sous atmosphère de protection gazeuse, et
- un dispositif de positionnement pour le déplacement et le positionnement du dispositif de protection gazeuse (108) sur la table de travail (105),
dans laquelle le dispositif de protection gazeuse (108) est amovible du dispositif de positionnement,
le dispositif de positionnement est aménagé pour déposer le dispositif de protection gazeuse (108) sur la table de travail (105), et
la tête de laser est déplaçable dans le dispositif de protection gazeuse (108) par le dispositif de positionnement de tête de laser pour l'application et le soudage du matériau appliqué.

2. Machine-outil selon la revendication 1, **caractérisée en ce que** le dispositif de protection gazeuse (108) comprend une bobine d'induction (111) pour chauffer la pièce à usiner.

3. Machine-outil selon la revendication 2, **caractérisée en ce que** la bobine d'induction (111) est agencée dans le dispositif de protection gazeuse (108) de telle sorte que lors de la pose du dispositif de protection gazeuse (108) sur la table de travail (105) par le dispositif de positionnement la pièce à usiner soit encerclée circonférentiellement par la bobine d'induction (111).

4. Machine-outil (100) selon l'une des revendications précédentes, **caractérisée en ce que** la tête de laser (101) est dotée d'une interface de machine-outil et peut être remplacée via cette interface par une broche de travail de la machine-outil (100).

5. Machine-outil (100) selon l'une des revendications précédentes, **caractérisée en ce que** le dispositif de protection gazeuse (108) est doté d'une interface de machine-outil et peut être remplacé via cette interface par une broche de travail (102).

6. Machine-outil (100) selon l'une des revendications précédentes, **caractérisée en ce que** le dispositif de positionnement dispose d'une cinématique séparée de la broche de travail (102) au moyen de laquelle le dispositif de protection gazeuse (108) peut être déplacé et positionné.

7. Machine-outil selon l'une des revendications précédentes, **caractérisée en ce que** le dispositif de positionnement est conçu, pour le déplacement et le positionnement du dispositif de protection gazeuse en tant que dispositif de préhension (107), avec un bras de préhension (107a) au moyen duquel le dispositif de protection gazeuse (108) peut être recueilli, déplacé et positionné.

8. Machine-outil (100) selon la revendication 7, **caractérisée en ce que** le dispositif de préhension (107) est agencé contre le logement de la tête de laser (101).

9. Machine-outil selon l'une des revendications précédentes, **caractérisée en ce que** le logement du dispositif de protection gazeuse (108) comprend une conduite d'amenée (110) pour un gaz de protection et une soupape à gaz commandable pour le remplissage du dispositif de protection gazeuse avec un gaz de protection.

10. Machine-outil (100) selon l'une des revendications précédentes, **caractérisée en ce que** contre le côté inférieur du dispositif de protection gazeuse (108) est prévue une garniture d'étanchéité (108B) élastique au moyen de laquelle une surface de contact entre le dispositif de protection gazeuse (108) positionné sur la table de travail (105) et la table de travail (105) peut être rendue étanche.

11. Machine-outil (100) selon l'une des revendications précédentes, **caractérisée en ce que** le dispositif de protection gazeuse (108) comprend un mécanisme de fixation (115) au moyen duquel le dispositif de protection gazeuse (108) peut être fixé de façon stationnaire sur la table de travail (105).

12. Machine-outil selon l'une des revendications précédentes, **caractérisée par** un équipement de commande pour la prédétermination d'un déroulement de travail avec les étapes consistant à
- positionner le dispositif de protection gazeuse (108) au moyen du dispositif de positionnement en une première position de la table de travail (105) de telle sorte que le dispositif de protection gazeuse (108) encercle une première pièce à usiner fixée sur la table de travail,
- remplir le dispositif de protection gazeuse avec un gaz de protection,
- positionner la tête de laser au moyen du dispositif de positionnement de tête de laser en une position de travail dans la région de la pièce à usiner à travailler,
- travailler la pièce à usiner (105A) au moyen de la tête de laser (101) sous atmosphère de protection gazeuse,
- faire déplacer la tête de laser (101) après le travail de la pièce à usiner par le dispositif de positionnement de tête de laser,
- soulever le dispositif de protection gazeuse depuis la table de travail au moyen du dispositif de positionnement (107) et le cas échéant
- positionner le dispositif de protection gazeuse (108) en une seconde position sur la table de travail (105), où une seconde pièce à usiner (105A) est fixée, et
- répéter les étapes susmentionnées.

13. Procédé de travail additif et soustractif d'une pièce à usiner (105A) contre une machine-outil (100), comprenant les étapes consistant à :
- positionner un dispositif de protection gazeuse (108) au moyen d'un dispositif de positionnement en une première position d'une table de travail (105) de telle sorte que le dispositif de protection gazeuse (108) encercle une première pièce à usiner (105A) fixée sur la table de travail, dans lequel le dispositif de protection gazeuse (108) est amovible du dispositif de positionnement, de telle sorte que le dispositif de protection gazeuse (108) soit déposé sur la table de travail (105),
- remplir le dispositif de protection gazeuse (108) avec un gaz de protection,
- positionner une tête de laser (101) au moyen du dispositif de positionnement de tête de laser en une position de travail dans la région de la pièce à usiner (105A) pour un travail additif de la pièce à usiner par soudage par application laser,
dans lequel la tête de laser est déplacée par le dispositif de positionnement de tête de laser dans le dispositif de protection gazeuse (108) pour l'application et le soudage du matériau appliqué,
- travailler de façon additive la pièce à usiner (105) par soudage par application laser au moyen de la tête de laser (101) sous atmosphère de protection gazeuse,
- faire déplacer la tête de laser (101) après le travail de la pièce à usiner par le dispositif de positionnement de tête de laser,
- soulever le dispositif de protection gazeuse (108) depuis la table de travail (105) au moyen du dispositif de positionnement, et
- travailler de façon soustractive la pièce à usiner (105A) par exemple par alésage, tournage, fraisage avant ou après refroidissement complet de la pièce à usiner.

14. Procédé de travail additif et soustractif d'une pièce à usiner (105A) contre une machine-outil (100) selon la revendication 13, comprenant en outre les étapes consistant à :
- positionner le dispositif de protection gazeuse (108) en une seconde position sur la table de travail (105) contre laquelle est fixée une seconde pièce à usiner, et
- répéter l'étape mentionnée de soudage par application laser.
